# EUROPEAN PATENT SPECIFICATION

(11) **EP 1 035 552 B1**
(45) Date of publication and mention of the grant of the patent: **25.07.2007**
(21) Application number: 00104960.0
(22) Date of filing: 08.03.2000
(51) Int. Cl.: H01G 4/232

(54) **Microchip-type electronic part**
Mikrochip Elektronikbauteil
Composant électronique du type micropuce

(30) Priority: 09.03.1999 JP 6227799
(43) Date of publication of application: 13.09.2000
(73) Proprietor: TDK Corporation, Chuo-ku, Tokyo (JP)
(72) Inventor: Ahiko, Taisuke, c/o TDK-MCC Corporation, Yuri-gun, Akita (JP); Sato, Hiroki, c/o TDK-MCC Corporation, Yuri-gun, Akita (JP); Ishigaki, Takaya, c/o TDK Corporation, Tokyo (JP)
(74) Representative: Grünecker, Kinkeldey, Stockmair & Schwanhäusser Anwaltssozietät

(56) References cited:
- "Dem Chip auf den Anschluss geschaut - Lötanschlüsse von Keramik-Vielschicht-Chipkondensatoren" ELEKTRONISCHAU, no. 10, October 1988 (1988-10), pages 22-37, XP000905647 Austria
- SEA FUE WANG ET AL.: "Silver-Palladium Thick-film Conductors" J. AM. CERAM. SOC., vol. 77, no. 12, December 1994 (1994-12), pages 3051-3072, XP002137601 USA

## Description

### Background of the Invention

### 1. Field of the Invention

The present invention relates to a microchip-type electronic part such as a chip-type lamination ceramic capacitor, a chip-type thermistor, or the like, and particularly relates to a microchip-type electronic part having external electrodes which are superior in short-circuit proofness.

### 2. Description of the Related Art

With the miniaturization of various kinds of electronic products in recent years, an earnest request for miniaturizing chip-type electronic parts has been made. For example, the standard size of chip-type lamination ceramic capacitors was the form of 3216 (L×W; 3.2 mm×1.6 mm) about five years ago. However, it was changed into the form of 2012 (2.0 mm×1.2 mm), and successively into a smaller form. At last, it has been now requested to develop microchip-type lamination ceramic capacitors each having an extremely small standard size which is the form of 0603 (0.6 mm × 0. 3 mm).

Generally, a chip-type electronic part such as a chip-type lamination ceramic capacitor, a chip-type inductor, or the like, is schematically constituted by a bare chip which is a ceramic bare-body, internal electrodes provided inside the bare chip, and a pair of external electrodes provided at the opposite end portions, respectively, of the bare chip so as to have electrical conduction with the internal electrodes. The chip-type electronic part is mounted on a substrate by soldering. Therefore, the reliability, electrical characteristics and mechanical characteristics of the chip-type electronic part are largely affected by the characteristics of the external electrodes when the chip-type electronic part is mounted. The external electrodes are therefore very important in such a chip-type electronic part.

Further, in the background art, external electrodes of such a chip-type electronic part are generally formed in the following manner. Silver powder or Silver-palladium powder in which palladium powder of not more than 5 weight % in the metal-component weight ratio is mixed with silver powder is further mixed with inorganic binder having glass for its main component. This mixture is kneaded into a suitable organic vehicle so that an electrically conductive paste is made up. The obtained electrically conductive paste is applied to the opposite end portions of the bare chip and baked to form external electrodes. In addition, a nickel-plating layer may be formed on the surface of each of the external electrodes in order to prevent silver erosion due to soldering (a phenomenon that silver is dissolved into solder). Further, solder or tin layers may be also formed on the surfaces of the nickel-plating layers in order to restrain the soldering property from deteriorating due to oxidization of the nickel-plating layers.

Further, 'Dem Chip auf den Anschluss geschaut - Lötanschlüsse von Keramik-Vielschicht-Chipkondensatoren' , ELEKTRONIKSCHAU, no. 10, October 1988 (1988-10), pages 22-37, discloses a chip capacitor having silver-palladium external electrodes or a chip capacitor having silver external electrodes plated with a nickel layer and further a tin layer plated on the nickel layer.

Through recent researches made by the present inventors, however, it was found that the background-art external electrodes having such a composition as described above have a problem as follows. In a microchip-type electronic part which has an extremely small standard size and hence in which a distance between a pair of external electrodes provided on opposite end portions of a bare chip is much shorter than that in the background art, for example, in a chip-type lamination ceramic capacitor of the above-mentioned 0603 form, short-circuit due to migration of silver contained in the external electrodes is apt to be produced between the external electrodes particularly under the environmental condition that the external electrodes are exposed to an atmosphere of high temperature and high humidity for a long time. As a result, sufficient durability cannot be obtained.

### Summary of the Invention

Taking the foregoing problem into consideration, it is an object of the present invention to provide a microchip-type electronic component having external electrodes which are improved in migration proofness and superior in short-circuit proofness in comparison with those in the background art.

In order to solve the above problem, there is provided a microchip-type electronic part comprising a bare chip which is a ceramic bare-body, internal electrodes provided inside the bare chip, and a pair of external electrodes provided at opposite end portions of the bare chip so as to have electrical conduction with the internal electrodes, a minimum distance between the pair of external electrodes being not larger than 0.5 mm; wherein the external electrodes contain silver and palladium as their metal components; and wherein a content ratio of the palladium is not less than 25 weight % of the metal components, wherein an external surface of each external electrode is completely coated with a first plating layer including nickel and an external surface of said first plating layer is completely coated with a second plating layer including one of tin and tin-lead. With such a configuration, the microchip-type electronic part according to the present invention is provided with external electrodes which are superior in migration proofness so that short-circuit failure can be restrained from being produced. As a result, the product life of the microchip-type electronic part is prolonged in comparison with that in the background art. Particularly, the microchip-type electronic part is suitable for application exposed to high humidity.

### Brief Description of the Drawings

Fig. 1 is a schematic sectional view of a microchip-type lamination ceramic capacitor which is an embodiment of the present invention.
Fig. 2 is a partially enlarged sectional view of the embodiment shown in Fig. 1.
Fig. 3 is a table showing external electrode formation conditions of Experiment 1.
Fig. 4 is a table showing the influence of the metal composition and alloying degree of external electrode on the short-circuit defective rate.
Fig. 5 is a table showing the influence of the metal composition of the external electrode and the minimum distance between the external electrodes on the short-circuit defective rate.

### Detailed Description of the Preferred Embodiments

Detailed description will be made below about a microchip-type electronic part according to the present invention with reference to the drawings showing an embodiment in which the electronic part is a lamination ceramic capacitor (the form of 0603 : L×W = 0.6 mm×0.3 mm).

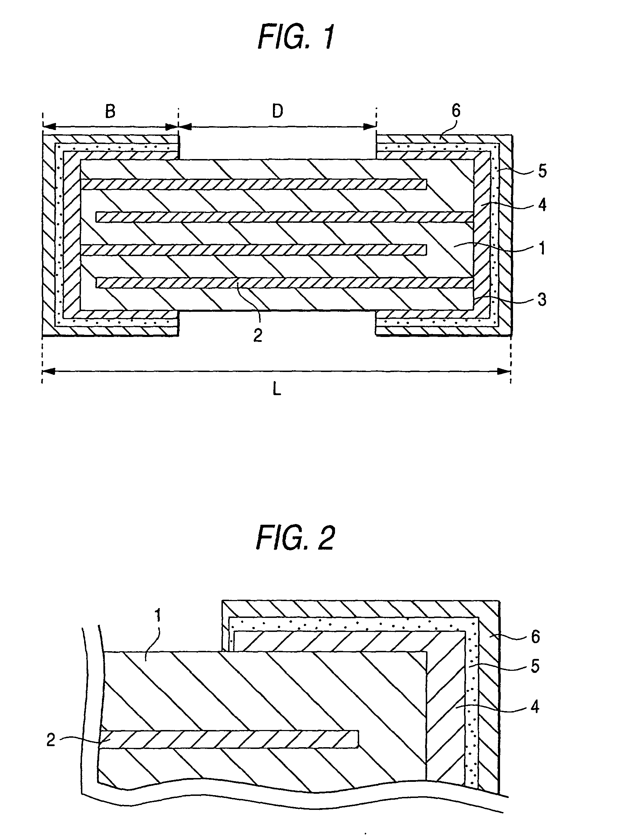

Fig. 1 is a sectional view of a microchip-type lamination ceramic capacitor (hereinafter, often abbreviated to "lamination chip capacitor") according to this embodiment.

In Fig. 1, the lamination chip capacitor is constituted by a bare chip 3, external electrodes 4, first plating layers 5 and second plating layers 6. The bare chip 3 is constituted by a ceramic bare-body 1 of a dielectric ceramic material, or the like, such as barium titanate series, calcium titanate series, strontium titanate series or lanthanum titanate series, and internal electrodes 2 of palladium or the like.

Fig. 2 shows a partially enlarged view of Fig. 1, and explains the detailed structure of the external electrode 4, the first plating layer 5 and the second plating layer 6 in this embodiment.

According to Fig. 2, in this embodiment, the external electrode 4 is formed on the external surface of the ceramic bare-body 1 so as to be in good close contact with the ceramic bare-body 1 and so as to be in electrical conduction with the internal electrode 2. The external surface of the external electrode 4 is completely coated with the first plating layer 5, and the first plating layer 5 is further completely coated with the second plating layer 6.

The external electrode 4 in this embodiment is a sinter which is obtained by such a method as follows. First, electrically conductive paste is applied to the surface of the bare chip 3 and then the paste is baked under the atmosphere. The paste contains, as its main component, alloy powder (particle size: 0.5 to 10 µm) of silver and palladium which are 72 weight % and 28 weight % relative to the metal-component weight respectively. The first plating layer 5 is a nickel-plating layer, and the second plating layer 6 is a tin-plating layer.

Further, the thickness of the external electrode 4 is generally set to be about 20 µm on the side surface of the bare chip 3 which is electrically connected with the internal electrodes 2 while the thickness of the external electrode 4 is generally set to be about 10 µm on the main surface portion of the bare chip 3. The thicknesses of the first and second plating layers 5 and 6 are set to be about 1.5 µm and about 3.5 µm, respectively. Further, the length (B) of the external electrode in the long side (L) direction of the main surface of the electronic component is set to be about 150 µm. Hence, the minimum distance (D = L-2B) between the external electrodes is generally set to be 0.3 mm.

Next, a method of forming the external electrodes according to this embodiment will be described.

First, by use of a popularly accepted method, a lamination ceramic capacitor having the dimensions of main surface long side (L) ×main surface short side (W) × thickness (T)=0.55×0.27×0.27 mm is formed out of a ceramic bare-body consisting of a dielectric ceramic material of barium titanate series and internal electrodes consisting of palladium or the like.

Next, a proper quantity of electrically conductive paste containing alloy powder, borosilicate glass and organic vehicle by 70 weight %, 9 weight % and 21 weight % respectively is applied to both the opposite end portions in the direction of the main surface long side of the lamination ceramic capacitor. In this case, the alloy powder contains silver and palladium in the weight ratio of 72:28, and the lamination ceramic capacitor coated with the electrically conductive paste is put into a belt furnace, and baked at the ultimate temperature of 760°C for 10 minutes under the atmosphere so that external electrodes are formed.

Further, this lamination ceramic capacitor with the external electrodes is immersed in a nickel plating bath and subjected to nickel electroplating so that a first plating layer covering each of the external electrodes is formed. Succeedingly, the lamination ceramic capacitor is immersed in a tin organic ester plating bath and subjected to tin plating similarly to the above so that a second plating layer covering each of the first plating layers is formed.

The external dimension of the microchip-type lamination ceramic capacitor formed thus according to this embodiment is approximately main surface long side (L) × main surface short side (W)×thickness (T)=0.6×0.3×0.3 mm.

As has been described above, in this embodiment, the alloy powder of silver and palladium containing 28 weight % of palladium is used as the metal components of the electrically conductive paste used for forming the external electrodes. However, as will be described later in Experiment 1, the metal components of the external electrodes of the present invention are not limited to those of this alloy powder. The external electrode may be formed of a material of silver and palladium with a predetermined palladium content. Therefore, for example, a mixture of silver powder and palladium powder which has a predetermined palladium content, metal powder of silver particles coated with palladium which has a predetermined palladium content, or the like, may be also used suitably in the present invention.

From the point of view of restraining silver migration, however, it is advantageous that silver is entirely alloyed with palladium in the external electrodes so that the amount of free silver ions are reduced. It is therefore especially preferable to use the alloy powder of silver and palladium (which has a predetermined content) or the metal powder of silver particles coated with palladium (which has a predetermined content). In the case where the mixture of silver powder and palladium powder is used, it is preferable to use a mixture in which the silver particles are smaller in size than conventional one, particularly smaller in maximum size (for example, the particle size is not larger than 1 µm) than the conventional one.

Similarly, it is preferable to select the baking conditions of the electrically conductive paste such that the temperature is higher and/or the time is longer than the conventional ones, so that silver can be completely alloyed with palladium in the paste.

These conditions will be described on the basis of the following Experiment 1.

### Experiment 1:

Various microchip-type lamination ceramic capacitors (0603 form) provided with external electrodes were formed under the following four kinds of formation conditions in order to verify the effect of the external electrodes according to the present invention. In addition, in each of the formation conditions, there were used 9 kinds of electrically conductive pastes having different palladium contents of 0, 5, 20, 25, 28, 30, 35, 50 and 70 weight % in metal components in each external electrode. The compositions of organic binders and organic vehicles used as components in the electrically conductive pastes, and bare chips used were equivalent in all of samples. The minimum distance between a pair of external electrodes after baking was set to be about 0.3 mm in each sample.

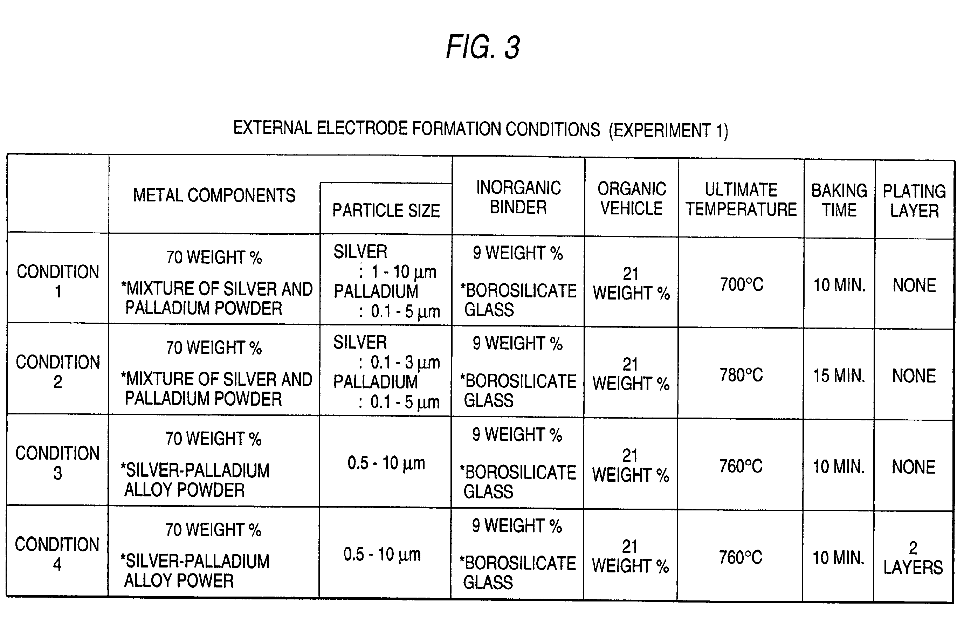

The external electrode formation conditions, shown in Fig. 3, in this experiment were as follows.

Condition 1 : 70 weight % of metal components as a mixture of silver powder having particle size in a range between 1 µm and 10 µm and palladium powder having particle size in a range between 0.1 µm and 5 µm, 9 weight % of inorganic binder of borosilicate glass, and 21 weight % of organic vehicle were kneaded by a three-roll mill. Thus, electrically conductive paste was obtained. The obtained electrically conductive paste was applied to both the opposite end portions in the main surface long side direction of a bare chip, and dried. After dried, the electrically conductive paste was baked in a belt furnace at the ultimate temperature of 700°C for 10 minutes under the atmosphere. Samples with the external electrodes formed under this Condition 1 were grouped into Sample Group 1.

Condition 2 : 70 weight % of metal components as a mixture of silver powder having particle size in a range between 0.1 µm and 3 µm and palladium powder having particle size in a range between 0.1 µm and 5 µm, 9 weight % of inorganic binder of borosilicate glass, and 21 weight % of organic vehicle were kneaded by a three-roll mill. Thus, electrically conductive paste was obtained. The obtained electrically conductive paste was applied to both the opposite end portions in the main surface long side direction of a bare chip, and dried. After dried, the electrically conductive paste was baked in a belt furnace at the ultimate temperature of 780°C for 15 minutes under the atmosphere. Samples with the external electrodes formed under this Condition 2 were grouped into Sample Group 2.

Condition 3 : 70 weight % of metal components as silver-palladium alloy powder having particle size in a range between 0.5 µm and 10 µm, 9 weight % of inorganic binder of borosilicate glass, and 21 weight % of organic vehicle were kneaded by a three-roll mill. Thus, electrically conductive paste was obtained. The obtained electrically conductive paste was applied to both the opposite end portions in the main surface long side direction of a bare chip, and dried. After dried, the electrically conductive paste was baked in a belt furnace at the ultimate temperature of 760°C for 10 minutes under the atmosphere. Samples with the external electrodes formed under this Condition 3 were grouped into Sample Group 3.

Condition 4 : 70 weight % of metal components as a mixture of silver-palladium alloy powder having particle size in a range between 0. 5 µm to 10 µm, 9 weight % of inorganic binder of borosilicate glass, and 21 weight % of organic vehicle were kneaded by a three-roll mill. Thus, electrically conductive paste was obtained. The obtained electrically conductive paste was applied to both the opposite end portions in the main surface long side direction of a bare chip, and dried. After dried, the electrically conductive paste was baked in a belt furnace at the ultimate temperature of 760°C for 10 minutes under the atmosphere. Further, the dried and baked body was immersed in a nickel plating bath so as to be subjected to nickel electric plating so that a first plating layer covering the external electrode was formed, and, successively similarly, the body with the first plating layer was immersed in an organic oxygen tin plating bath so as to be subjected to tin plating so that a second plating layer covering the first plating layer was formed. Samples with the external electrodes and the plating layers formed under this Condition 4 were grouped into Sample Group 4.

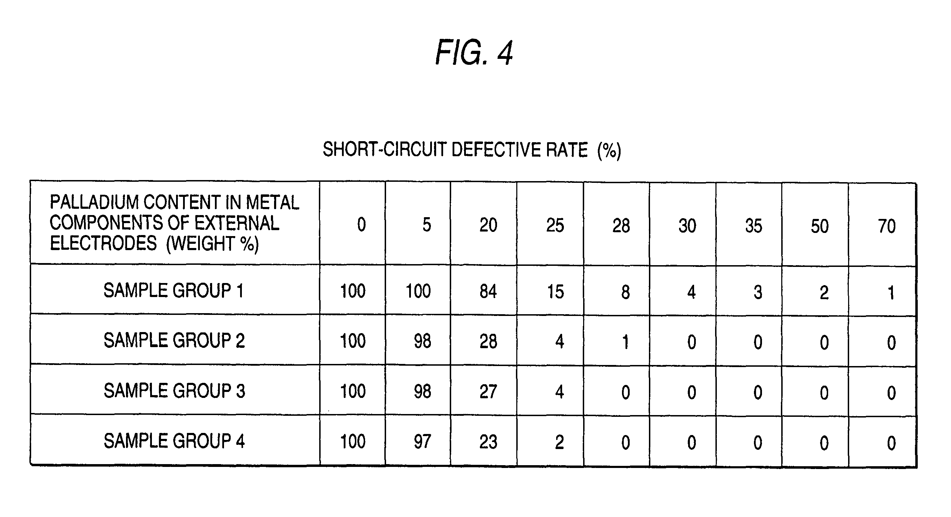

Thirty-six kinds of microchip-type lamination ceramic capacitors were formed under the 4 kinds of external electrode formation conditions by use of the 9 kinds of electrically conductive pastes having different silver-palladium compounding ratios, as mentioned above. Voltage of 50 V was continuously applied to each sample for 1,000 hours under the environmental conditions of the temperature of 60°C and the humidity of 95%. Then, the rate of short-circuit failure (%) after 1,000 hours was inspected. The result was shown in Fig. 4.

As is shown obviously in Fig. 4, in each of the sample groups, the short-circuit defective rate after a voltage is continuously applied for 1,000 hours is reduced with increase of the palladium content in the paste. Particularly when the palladium content is not less than 25 weight % of the metal components, the short-circuit defective rate is reduced conspicuously. Further, it can be found that short-circuit failure is hardly produced when the palladium content is not less than 35 weight %.

In Sample Group 1, however, short-circuit defective was produced even if the palladium content in the external electrodes was increased to 35 weight % or more. This is because silver powder having larger particle size was used as material and baking was performed at a lower temperature and for a shorter time in Condition 1 in comparison with Condition 2. As a result, silver in the external electrode after baking could not be completely alloyed with palladium though the amount of palladium was sufficient. Thus, free silver ions were generated easily by the application of voltage so that the amount of silver migration in the external electrodes in Sample Group 1 was larger than that in Sample Group 2.

In comparison between Sample Groups 2 and 3, short-circuit was produced in a case of a higher palladium content (28 weight %) in Sample Group 2 than in Sample Group 3 though baking was performed at a higher temperature and for a longer time in Condition 2 in comparison with Condition 3. This is because a mixture of silver powder and palladium powder which were not alloyed with each other was used as the material of metal components in Condition 2 while silver-palladium alloy powder was used in Condition 3. Thus, silver in the external electrodes produced migration more easily in Sample Group 2 than in Sample Group 3.

Further, in comparison between Sample Groups 3 and 4, it is recognized that the short-circuit defective rate was reduced to some extent in Sample Group 4 in which plating layers were provided on the external surface of each external electrode, while no short-circuit defective was produced when the palladium content was not smaller than 28 weight % of the metal components in both the Sample Groups 3 and 4. Accordingly, it is considered from the point of view of restraining short-circuit defective that it is not inevitable to provide the plating layer on the external surface of each external electrode. However, it has been heretofore is recognized that the properties such as solder wettability are improved by providing the plating layers on the external surface of each external electrode.

As has been described above, the effect of restraining short-circuit, which can be considered to be caused by the improvement of migration proofness, was recognized through this experiment when silver and palladium were used as the metal components in external electrodes of a microchip-type electronic part and the palladium content was set to be not less than 25 weight % of the metal components or preferably not less than 30 weight %. More preferably, the palladium content is set to be not less than 35 weight %. In that case, it is considered that short-circuit produced by scattering in manufacture can be restrained more securely. However, palladium is more expensive than to silver. Therefore, it will be advantageous in manufacture to reduce the palladium content within a range in which the reliability required for products is not spoiled.

In addition, it is considered that the short-circuit defective rate can be further reduced if, in baking (burning or sintering) of the external electrodes, silver-palladium alloy powder is used as the material of metal components or the baking conditions are set so that silver in the external electrodes after baking is easily and completely alloyed with palladium and silver migration is restrained, for example, by making the baking temperature high and/or making the baking time long.

As has been described above, in this embodiment and the above-mentioned Experiment 1, the electrically conductive paste as the material of the external electrodes contains 70 weight % of metal components, 9 weight % of inorganic binder and 21 weight % of organic vehicle. However, electrically conductive paste used in the present invention is not limited to this paste. For example, electrically conductive paste containing metal components in a range of from 60 weight % to 80 weight %, inorganic binder in a range of from 3 weight % to 15 weight % and inorganic vehicle in a range of from 15 weight % to 25 weight % may be used in the same manner as in the background-art external electrodes. Then, the content of the inorganic binder is changed in accordance with the purposes of products and in accordance with the kind of inorganic binder. Usually in the case of inorganic binder using lead-containing glass such as lead borosilicate glass or the like, the inorganic binder is blended in the ratio of about 7 to 15 weight % to the total paste weight. In the case of inorganic binder using glass containing no lead, the inorganic binder is blended in the ratio of about 3 to 8 weight % to the total paste weight. As for the organic vehicle, there is no special limit in the present invention. Organic vehicles popularly accepted in this industrial field may be generally used in accordance with the specifications and purposes of products. The compounding ratio of the organic vehicle may be also determined in accordance with the kinds and amounts of other components of the electrically conductive paste so that desired properties of the electrically conductive paste are obtained.

Further, although the first and second plating layers were provided on the external surface of each external electrode in this embodiment. However, these plating layers are not always necessary though an effect contributing to reduction of the short-circuit defective rate is recognized as shown in the above-mentioned Experiment 1. For example, no plating layer or only one plating layer may be provided. In addition, the plating components forming the plating layers are not limited to nickel or tin used in this embodiment. For example, plating components such as tin-lead popularly accepted in this industrial field may be selected and applied to the present invention in accordance with the purposes.

The aforementioned microchip-type electronic part according to the present invention has a conspicuous effect of restraining short-circuit particularly when the minimum distance between the external electrodes is generally not larger than 0. 5 mm. This effect will be described on the basis of the following Experiment 2.

### Experiment 2:

In order to verify the effect of the external electrodes according to the present invention, five groups of chip-type lamination ceramic capacitors different in standard size or in the minimum distance (D) between the external electrodes after baking were formed. Sample Group 1 had the form of 1608 (1.6×0.8 mm) with the distance D of 0.9 mm, and Sample Group 2 had the form of 1005 (1.0×0.5 mm) with the distance D of 0.55 mm. These Sample Groups 1 and 2 had the same dimensional conditions as those of background-art chip-type lamination ceramic capacitors. On the other hand, Sample Groups 3 to 5 had the same form of 0603 (0.6×0.3 mm) with the distance D of 0.45 mm, 0.4 mm and 0.3 mm respectively, that is, had the same dimensional conditions as those of microchip-type ceramic capacitors. In addition, in each of the Sample Groups, nine kinds of electrically conductive pastes having different palladium contents of 0, 5, 20, 25, 28, 30, 35, 50 and 70 weight % in metal components in each external electrode were used. The compositions of inorganic binders and organic vehicles used as components of the electrically conductive pastes, the compositions of bare chips used, and so on were equivalent in all of samples except the dimensions of the samples.

The external electrode formation conditions in this experiment were as follows. That is, 70 weight % of metal components of silver-palladium alloy powder having particle size in a range between 0.5 µm and 10 µm, 9 weight % of inorganic binder of borosilicate glass, and 21 weight % of organic vehicle were kneaded by a three-roll mill. Thus, electrically conductive paste was obtained. The obtained electrically conductive paste was applied to both end portions opposite in the main surface long side direction of a bare chip, and dried. After dried, the electrically conductive paste was baked in a belt furnace at the ultimate temperature of 760°C for 10 minutes under the atmosphere. Further, the dried and baked body was immersed in a nickel plating bath so as to be subjected to nickel electric plating by a watt bath so that a first plating layer covering the external electrode was formed, and, successively similarly, the body with the first plating layer was immersed in an organic oxygen tin plating bath so as to be subjected to tin plating so that a second plating layer covering the first plating layer was formed.

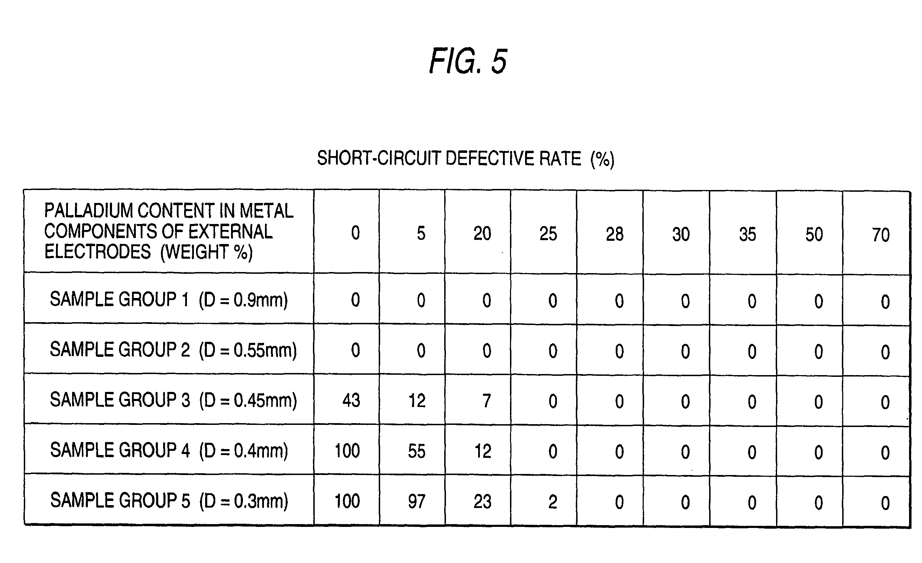

Forty-five kinds of microchip-type lamination ceramic capacitors having 5 kinds of formation dimensions were formed by use of the 9 kinds of electrically conductive pastes having different silver-palladium compounding ratios, as mentioned above. Voltage of 50 V was continuously applied to each sample for 1,000 hours under the environmental conditions of the temperature of 60°C and the humidity of 95%. Then, the rate of short-circuit failure (%) after 1,000 hours was inspected. The result was shown in Fig. 5.

As is shown obviously in Fig. 5, in Sample Groups 1 and 2 having the background-art dimensions, that is, the background-art standard size and minimum distance (D) between the external electrodes, no short-circuit was produced independently of the palladium content in the external electrodes. On the contrary, in Sample Groups 3 to 5 having the same dimensions as those of microchip-type electronic parts, the short-circuit defective rate was reduced with the increase of the palladium content in the external electrodes. Particularly if the palladium content was not smaller than 25 weight % to the metal components in the external electrodes, the short-circuit defective rate was reduced conspicuously. Further, the effect of reducing the short-circuit defective rate with the increase of the palladium content in the external electrode was recognized clearly as the minimum distance (D) between the opposite external electrodes was shorter, even if the samples had the same external dimensions (the form of 0603) .

It is considered from above that the effect of the external electrodes according to the present invention is exhibited effectively in microchip-type electronic parts in which the minimum distance (D) between the opposite external electrodes is less than 0.55 mm. Then, it is necessary that the palladium content of the metal components in the external electrodes is not less than 25 weight % of the metal component amount, preferably not less than 28 weight %. Further, taking a manufacturing error in the minimum distance (D) into consideration, it is more preferable that the palladium content is not less than 35 weight %.

The above description was made about an exemplary case in which microchip-type electronic parts according to the present invention were chip-type lamination ceramic capacitors. However, the present invention is not limited to this case, but the effect of the present invention can be exhibited in general-use chip-type electronic parts such as lamination chip inductors, lamination chip resistors, etc. having micro standard sizes.

As has been described in detail above, a microchip-type electronic part according to the present invention has external electrodes which are higher in the palladium content than the background-art external electrodes. Accordingly, silver migration from the external electrodes is restrained, and the short-circuit defective rate due to the silver migration is reduced. It is therefore possible to improve the reliability of products. Such an effect is exhibited more effectively, particularly when the minimum distance between the external electrodes is not longer than 0.5 mm.

## Claims

1. An electronic part comprising:
a bare chip (3) which is a ceramic bare-body (1); internal electrodes (2) provided inside said bare chip (3); and
a pair of external electrodes (4) provided at opposite end portions of said bare chip (3), having electrical conduction with said internal electrodes and wherein a minimum distance (D) between said pair of external electrodes (4) is not larger than 0.5 mm and **characterised in that** said pair of external electrodes includes silver and palladium as their metal components a content ratio of the palladium is not less than 25 weight % of the metal components and wherein an external surface of each external electrode (4) is completely coated with a first plating layer (5) including nickel and an external surface of said first plating layer (5) of said external electrode (4) is completely coated with a second plating layer (6) including one of tin and tin-lead.

2. The electronic part according to claim 1, wherein the content ratio of said palladium is not less than 35 weight % of said metal components.

3. The electronic part according to claim 1, wherein each of said external electrodes (4) is a sinter of electrically conductive paste including silver-palladium alloy.

4. The electronic part according to claim 1, wherein each of said external electrodes (4) is a sinter of electrically conductive paste including mixed metal powder of silver and palladium in which silver particles are coated with palladium.

5. The electronic part according to claim 4, wherein particle size of each silver particle is not larger than 1 µm.

6. The electronic part according to claim 1, wherein silver contained in said external electrodes (4) is completely alloyed with palladium.

7. The electronic part according to claim 1, wherein the minimum distance (D) between said pair of external electrodes (4) is in the range between 0.2 mm and 0.4 mm.

8. The electronic part according to claim 1, wherein each said internal electrode (2) contains palladium as its main component.

## Patentansprüche

1. Elektronisches Bauteil umfassend:
einen Nacktchip (3), der ein blanker Keramikkörper (1) ist;
innere Elektroden (2), die innerhalb des Nacktchips (3) vorgesehen sind;
ein Paar äußere Elektroden (4), die an entgegengesetzten Endbereichen des Nacktchips (3) vorgesehen sind und elektrisch leitend mit den inneren Elektroden verbunden sind, wobei ein minimaler Abstand (D) zwischen dem Paar äußerer Elektroden (4) nicht größer ist als 0,5 mm,
**dadurch gekennzeichnet, dass** das Paar äußerer Elektroden Silber und Palladium als ihre Metallkomponenten beinhaltet, wobei ein Gehaltsverhältnis des Palladiums nicht weniger als 25 Gewichtsprozent der Metallkomponenten ausmacht und wobei die äußere Oberfläche einer jeden äußeren Elektrode (4) vollständig mit einer ersten Metallisierungsschicht (5) beschichtet ist, die Nickel enthält, und wobei eine äußere Oberfläche der ersten Metallisierungsschicht (5) der äußeren Elektrode (4) vollständig mit einer zweiten Metallisierungsschicht (6) beschichtet ist, die Zinn oder Zinnblei enthält.

2. Elektronisches Bauteil nach Anspruch 1, wobei das Gehaltsverhältnis von Palladium nicht geringer ist als 35 Gewichtsprozent der Metallkomponenten.

3. Elektronisches Bauteil nach Anspruch 1, wobei jede der äußeren Elektroden (4) durch Sintern aus einer elektrisch leitenden Paste, die eine Silberpalladiumlegierung enthält, hergestellt ist.

4. Elektronisches Bauteil nach Anspruch 1, wobei jede der äußeren Elektroden (4) ein Sinter einer elektrisch leitenden Paste ist, die ein gemischtes Metallpulver aus Silber und Palladium enthält, in welchem Silberpartikel mit Palladium beschichtet sind.

5. Elektronisches Bauteil nach Anspruch 4, wobei die Partikelgröße eines jeden Silberpartikels nicht größer ist als ein Mikrometer.

6. Elektronisches Bauteil nach Anspruch 1, wobei Silber, das in den äußeren Elektroden (4) enthalten ist, vollständig mit Palladium legiert ist.

7. Elektronisches Bauteil nach Anspruch 1, wobei der minimale Abstand (D) zwischen dem Paar von äußeren Elektroden (4) in einen Bereich zwischen 0,2 mm und 0,4 mm liegt.

8. Elektronisches Bauteil nach Anspruch 1, wobei jede innere Elektrode (2) Palladium als seine Hauptkomponente enthält.

## Revendications

1. Composant électronique comprenant :
une puce nue (3) qui est un corps nu en céramique (1) ;
des électrodes internes (2) prévues à l'intérieur de ladite puce nue (3) ; et
une paire d'électrodes externes (4) prévues au niveau des extrémités opposées de ladite puce nue (3), ayant une conduction électrique avec lesdites électrodes internes (2) et où une distance minimale (D) entre ladite paire d'électrodes externes (4) ne dépasse pas 0,5 mm et **caractérisée en ce que** ladite paire d'électrodes externes comprend de l'argent et du palladium comme composants métalliques, un rapport de teneur du palladium n'étant pas inférieur à 25 % en poids des composants métalliques, et où une surface externe de chaque électrode externe (4) est complètement recouverte d'une première couche de placage (5) comprenant du nickel et une surface externe de ladite première couche de placage (5) de ladite électrode externe (4) est complètement recouverte d'une seconde couche de placage (6) comprenant de l'étain ou de l'étain et du plomb.

2. Composant électronique selon la revendication 1, dans lequel le rapport de teneur dudit palladium n'est pas inférieur à 35 % en poids desdits composants métalliques.

3. Composant électronique selon la revendication 1, dans lequel chacune desdites électrodes externes (4) est un aggloméré constitué d'une pâte électriquement conductrice comprenant un alliage d'argent et de palladium.

4. Composant électronique selon la revendication 1, dans lequel chacune desdites électrodes externes (4) est un aggloméré constitué d'une pâte électriquement conductrice comprenant un mélange de poudre de métaux comportant de l'argent et du palladium dans laquelle les particules d'argent sont recouvertes de palladium.

5. Composant électronique selon la revendication 4, dans lequel la taille particulaire de chaque particule d'argent ne dépasse pas 1 µm.

6. Composant électronique selon la revendication 1, dans lequel l'argent contenu dans lesdites électrodes externes (4) forme complètement un alliage avec le palladium.

7. Composant électronique selon la revendication 1, dans lequel la distance minimale (D) entre ladite paire d'électrodes externes (4) se trouve dans la gamme entre 0,2 mm et 0,4 mm.

8. Composant électronique selon la revendication 1, dans lequel chacune desdites électrodes internes (2) contient du palladium pour principal composant.
